# EUROPEAN PATENT SPECIFICATION

(11) **EP 3 418 541 B1**
(45) Date of publication and mention of the grant of the patent: **30.08.2023**
(21) Application number: 18176174.3
(22) Date of filing: 05.06.2018
(51) Int. Cl.: F02D 41/14, F02D 41/40, F02D 35/02, F02D 41/00

(54) **METHOD FOR CONTROLLING COMBUSTION IN ENGINES**
VERFAHREN ZUR STEUERUNG DER VERBRENNUNG IN MOTOREN
PROCÉDÉ POUR COMMANDER LA COMBUSTION DANS DES MOTEURS

(30) Priority: 22.06.2017 GB 201709963
(43) Date of publication of application: 26.12.2018
(73) Proprietor: Caterpillar Motoren GmbH & Co. KG, 24159 Kiel (DE)
(72) Inventor: SIXEL, Eike Joachim, 24109 Kiel (DE); WESTER, Daniel, 24242 Felde (DE); SCHMIDT, Andre, 18147 Rostock (DE); MARSCHEIDER, Hannes, 24790 Schülldorf (DE); GRAUMÜLLER, Robert, 24103 Kiel (DE); WOLFGRAMM, Marius, 24116 Kiel (DE)
(74) Representative: Novagraaf Group

(56) References cited:
- US-A1- 2002 195 086
- US-A1- 2010 030 453
- US-A1- 2010 088 008
- US-A1- 2014 222 314
- US-A1- 2016 208 764
- US-A1- 2017 082 054

## Description

### Technical Field

The present disclosure relates to a method for controlling combustion of fuels in internal combustion engines, and, more particularly, the present disclosure relates to a control system that responds to a change in an ignition quality of the fuels.

### Background

Engines, such as Diesel engines, Diesel-Gas, or dual fuel engines, have gained popularity and have been relatively extensively relied upon for power generation in recent years. Depending upon a nature of work, location, costs, or an environmental norm, for example, there may exist a variation in a quality of ignition of Diesel fuels applied in such engines. Typically, a quality of such a fuel may correspond to or be measured according to a cetane number of the fuel. The cetane number of the fuel may vary in different regions. For example, in certain regions, it may be inevitable to use a relatively low quality fuel (i.e. a fuel with lower cetane number), possibly because of a shortage of a good quality fuel. Use of low quality fuels may cause reduced engine performance, engine misfire, hampered efficiency, and higher emissions, among some undesirable effects. Similarly, a use of a relatively high quality fuel may also have some undesirable effects - that they alter a desired combustion characteristics of the fuel. Moreover, operators of engines that employ such fuels may be unaware of the fuel quality in real time (or the cetane number of the fuel), and thus may not be able to take real time precautionary measures to avoid such undesirable effects.

United States Patent US 8,532,911 relates to a method and a system for adaptively controlling a Diesel engine for variations in a cetane number of the Diesel fuel. An engine controller includes various control modules with algorithms for estimating the fuel cetane number, or determining the ignition delay that the engine is experiencing, or both. With this information, the controller adjusts an amount of exhaust gas recirculation that is used, thus varying the amount of oxygen that is available in the intake charge to burn the fuel, and/or adjusts the timing of a fuel injection event as another way of altering a nature of combustion.

Document US 2010/0088008 A1 relates to an engine control in accordance with a fuel property determined based on a torque increase amount sensing value. Thereby, a torque increase amount obtaining section obtains an increase amount of the output torque caused by a small injection or physical quantity correlated with the increase amount as a torque increase amount sensing value.

Document US 2002/0195086 A1 relates to a cylinder pressure ration obtained by dividing first and second values of cylinder pressure, and sensed at different points in a thermodynamic cycle, by one another.

Document US 2010/0030453 A1 relates to a cetane number detection means in which an angular velocity detection means for detecting the rotation angular velocity of the crankshaft of an engine, and which detects a variation in the value of the amplitude of the angular velocity detected by the angular velocity detection means as a variation in cetane number.Document US 2016/0208764 A1 relates to a system and method for monitoring and controlling a combustion engine by a determination of a knock margin value and an estimation of a fuel quality value of a fuel injected into the combustion engine based at least on a comparison between the knock margin value and a laboratory performance data set.

Document US 2014/0222314 A1 relates to methods and systems for adjusting a plurality of fuel injections supplied to a cylinder during a cycle of the cylinder, wherein fuel amounts are adjusted in response to a biodiesel concentration in fuel supplied to an engine. Document US 2017/082054 A1 discloses to determine a divergence in performance by controlling whether the combustion occurs at an optimized crankshaft position and whether the combustion has an expected duration, which are indicators on the quality of the fuel or to the engine's degree of efficiency.

### Summary of the Invention

In one aspect, the disclosure relates to a method for controlling combustion of a fuel in an engine. The method according to claim 1 comprises estimating a quality of the fuel based on one or more parameters of the engine and varying an amount of the fuel injected into the engine based upon the quality of the fuel varying from a desired quality value. The method further comprises modifying a pressure of air to be introduced in the engine for combustion based on the varied amount of the fuel. The method further comprises:
i) estimating the quality of the fuel further comprises measuring, by a pressure sensor, a pressure within a combustion chamber of the engine during a combustion of the fuel,
ii) determining a duration of the combustion of the fuel based on the pressure measurement, wherein an increase in the duration of the combustion is indicative of a decrease in the quality of the fuel, and a decrease in the duration of the combustion is indicative of an increase in the quality of the fuel; and
iii) determining a temperature of an exhaust gas of the engine (102), wherein an increase in the temperature of the exhaust gas is indicative of a decrease in the quality of the fuel, and a decrease in the temperature of the exhaust gas is indicative of an increase in the quality of the fuel;

An engine system, which is not part of the invention but may help understand the invention better, comprises an engine, and injector, and air-pressure regulator, one or more sensors, and a controller. The injector is configured to inject fuel into the engine. The air-pressure regulator is configured to vary a pressure of air for combustion within the engine. The sensors are configured to detect one or more parameters of the engine. Further, the controller is coupled to the injector, the air-pressure regulator, and the sensors, and is configured to estimate a quality of the fuel based on the one or more parameters and control the injector to vary an amount of the fuel injected into the engine upon the quality of the fuel varying from a desired quality value. The controller is further configured to control the air-pressure regulator to modify a pressure of air at an intake manifold of the engine based on the varied amount of the fuel.

### Brief Description of the Drawings

FIG. 1 is a schematic view of an engine system; and
FIG. 2 is a flowchart illustrating an exemplary method for controlling a combustion of a fuel in an engine of the engine system, in accordance with an aspect of the present disclosure.

### Detailed Description

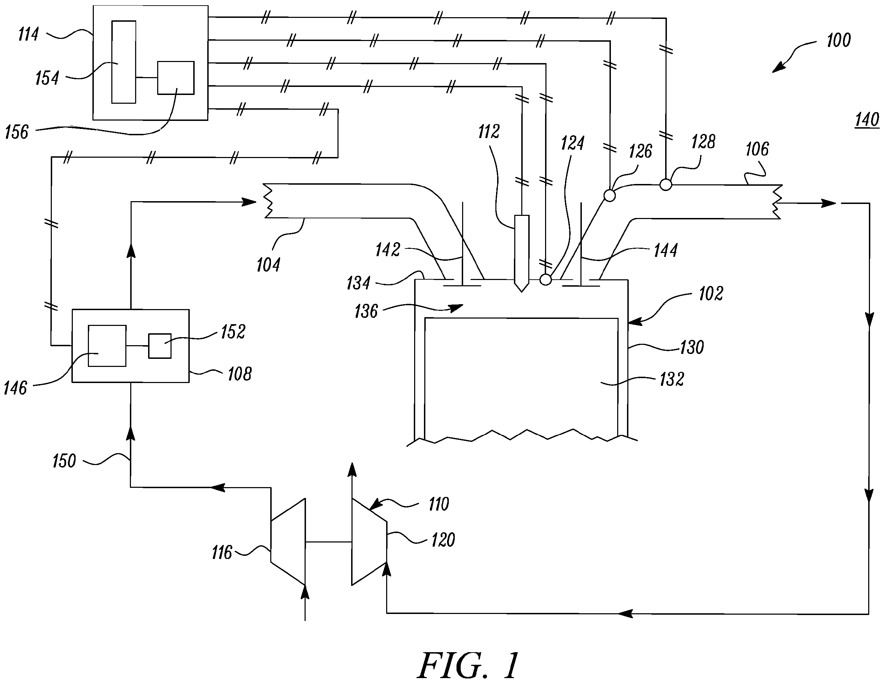

Referring to FIG. 1 an engine system 100 is illustrated. The engine system 100 may be applied in a variety of machines, such as, but not limited to, trucks, locomotives, ships, and other machines known in the art. In some implementations, the engine system 100 may be applied in stationary power generating machines.

One or more aspects of the present disclosure relate to addressing complications in engine operations, such as an engine misfire, a change in a combustion characteristic, a change in exhaust gas temperature, that generally arise, such as because of a relatively low quality of ignition of an ignition fuel or because of a high quality of ignition of an ignition fuel. To address such complications, the engine system 100 executes a corrective action when it is detected that a quality of the fuel has varied from a desired quality value. Notably, a low quality of ignition of the ignition fuel may be because of a use of a low quality of the ignition fuel, and likewise, a high quality of ignition of the ignition fuel may be because of a use of a high quality of the ignition fuel. Further, the ignition fuel may be a Diesel fuel, and may be simply referred to as a fuel, hereinafter. The engine system 100 includes an engine 102, and for the purpose of the present disclosure, it may be noted that a quality of the fuel may relate to an ignitability of the fuel within a combustion chamber of the engine 102. In turn, an ignitability of the fuel may also correspond to a cetane number of the fuel, and a quality of fuel may be determined by monitoring a cetane number of the fuel. For example, a delay in ignition of the fuel is a measure for the cetane number.

The engine system 100 further includes an intake manifold 104, an exhaust manifold 106, an air-pressure regulator 108, a turbocharger 110, an injector 112, and a controller 114. The turbocharger 110 further includes a compressor 116 and a turbine 120. Additionally, the engine system 100 also includes one or more sensors that may be configured to sense one or more parameters of the engine 102, during operations, and based on which certain operational requirements of one or more aspects of the present disclosure may be met. For example, the one or more sensors include a pressure sensor 124 and a temperature sensor 126. Further, the engine system 100 may also include a pollutant sensor 128. A discussion pertaining to these sensors, and related operations, is set out later in the disclosure. Moreover, the one or more parameters of the engine 102 includes a pressure within the combustion chamber of the engine 102, a combustion characteristic of a fuel within said combustion chamber of the engine 102, and an amount of a pollutant emission from the engine 102. Details of the combustion characteristic will be discussed later in the application.

The engine 102 may be a compression ignition engine, such as a Diesel engine that may be configured to receive a fuel, such as Diesel fuel for combustion and power generation. Optionally, the engine 102 may use other fuels, such as gaseous fuels, including but not limited to propane gas, hydrogen gas, natural gas, or other suitable and applicable gaseous fuels, singularly or in combination with each other, or with the Diesel fuel, to power the engine's operation in a known manner. Effectively, although Diesel fuel is contemplated as fuel for the engine system 100, it may be appreciated that other types of fuels, such as gaseous fuels (e.g. natural gas), gasoline, etc., may also be utilized. The engine 102 may embody a V-type, an in-line, or any other configuration as is conventionally known. The engine 102 may be a multi-cylinder engine, although aspects of the present disclosure are applicable to engines with a single cylinder as well. Further, the engine 102 may be one of a two-stroke engine, a four-stroke engine, or any other known type of engine. Although these configurations are disclosed, aspects of the present disclosure need not be limited to any particular engine type.

The engine 102 includes a cylinder 130, and a piston 132 that may reciprocate within the cylinder 130 to generate power. Although a single cylinder is shown, the engine 102 may include multiple cylinders, and a configuration and working of the single cylinder, as shown, may be applicable to engine applications that use multiple cylinders. The cylinder may include a cylinder head 134, and the engine 102 may define a combustion chamber 136 within the cylinder 130, delimited by the piston 132, the cylinder head 134, and the cylinder 130.

The intake manifold 104 may be fluidly coupled to the compressor 116 of the turbocharger 110 to receive compressed air from the compressor 116. The intake manifold 104 may be configured to facilitate transfer of the compressed air from the compressor 116 to the combustion chamber 136. In one implementation, the intake manifold 104 may end in intake ports to feed the air into the cylinder. The fuel will be introduced in this intake port and both the compressed air and the fuel may be mixed in the intake ports prior to an introduction into the cylinder 130 (or the combustion chamber 136).

The exhaust manifold 106 may be configured to release residual products of combustion to an ambient 140 as exhaust gas. In the depicted embodiment, the exhaust gas is routed out to the ambient 140 through the turbine 120 of the turbocharger 110, and in that manner, a flow of the exhaust gas may drive the turbine 120 during a passage of the exhaust gas through the turbine 120. A drive of the turbine 120 may facilitate a drive of the compressor 116, in turn enabling the compressor 116 to draw in air from the ambient 140, compress said air, and deliver the compressed air into the combustion chamber 136 to facilitate combustion.

Further, the engine 102 includes one or more valves. For example, the one or more valves include a first valve 142 and a second valve 144. In one implementation, the first valve 142 is an intake valve that may be adapted to regulate an entry of the air-fuel mixture into the combustion chamber 136 from the intake manifold 104, while the second valve 144 may be an exhaust valve adapted to regulate an exit of residual gases of combustion of the air-fuel mixture out of the combustion chamber 136 into the exhaust manifold 106. Although a single first valve 142 and a single second valve 144 is disclosed, multiple first valves and multiple second valves may be applied.

The injector 112 is configured to inject the fuel into the combustion chamber 136 of the engine 102 for combustion. The injector 112 may be configured to inject fuel independently or in combination with other fuels, such as the ones noted above. According to an embodiment, the injector 112 is assembled into the cylinder head 134, and the injector 112's tip is extended into the combustion chamber 136 so as to facilitate injection of the fuel into the combustion chamber 136. In some implementations, the injector 112 may be configured to receive an amount of the fuel from a fuel tank (not shown), and, for this purpose, a dedicated fuel line may be arranged between the fuel tank and injector 112 so as to facilitate fuel flow from the fuel tank to the injector 112. One or more valves may be arranged on such dedicated fuel lines that may help in regulation of an associated fuel flow. In some implementations, the injector 112 may be positioned at an alternate location. For example, the injector 112 may be located at the compressor 116's inlet or within the intake manifold 104.

In one implementation, the injector 112 may be electronically operated. To this end, the injector 112 may include a solenoid valve mechanism, or a needle valve mechanism, that may help facilitate fuel injection into the combustion chamber 136. By use of such mechanisms, it may also be possible to quantify a fuel amount that is injected into the combustion chamber 136. To this end, the injector 112 may be coupled to the controller 114, and, in some implementations, it is possible that a particular amount of fuel that is to be injected into the combustion chamber 136 may be determined by the controller 114 (related discussions will be set out later in the application).

The pressure sensor 124 is configured to detect a pressure condition within the cylinder 130, such as within the combustion chamber 136 of the cylinder 130, during engine operation. In one implementation, therefore, the pressure sensor 124 may be positioned within the combustion chamber 136 of the engine 102. For example, the pressure sensor 124 may be accommodated within the cylinder head 134, as shown, and may be exposed to the combustion chamber 136 of the engine 102. It may be noted that the pressure sensor 124 may be coupled to the controller 114 to provide the controller 114 with a parameter of a sensed data of pressure according to a continuous, or a preset signal delivery schedule. Moreover, the pressure sensor 124 may also be used by the controller 114 to determine a pressure history within the combustion chamber 136, and thus help compute various other parameters of the engine 102.

Among the parameters, a detection of pressure, or of a pressure history, may help compute/determine a parameter of the engine - one or more combustion characteristics of the engine 102. A combustion characteristic helps to determine a quality of the fuel. Combustion characteristics include timings associated with a combustion activity in the combustion chamber 136. More particularly, a combustion characteristic may pertain to each of a start of the combustion, an end of the combustion, a center of the combustion, and pertain to a duration of the combustion. For instance, a start of the combustion may by deduced by using the pressure history, for example, stored within a memory of the controller 114, and it may be possible to determine and analyze these characteristics for one or more operation cycles of the engine 102. A variation in any of these characteristics will help deduce other engine system aspects - for example, in this case, the quality of fuel.

Effectively, a quality of the fuel is estimated by using the pressure sensor 124 that measures a pressure within the combustion chamber 136 during the combustion of the fuel, or at any given point of the combustion. Further, a duration of the combustion of the fuel is determined based on the pressure measurement. More particularly, an increase in the duration of the combustion is indicative of a decrease in the quality of the fuel, while a decrease in the duration of the combustion is indicative of an increase in the quality of the fuel. In an embodiment, it is possible to determine a start of the combustion of the fuel based on the pressure measurement. For instance, a retarded start of the combustion is indicative of a decrease in the quality of the fuel, while an advance in the start of the combustion is indicative of an increase in the quality of the fuel.

In one example, the pressure sensor 124 may be in the form of a piezoelectric element disposed within the cylinder head 134. Such an element (i.e. the piezoelectric element) may include strain gauges or other known pressure sensitive devices, that may react to a change in pressure in the combustion chamber 136, and may provide a signal indicative of said pressure to the controller 114.

The temperature sensor 126 may be positioned in the exhaust manifold 106, or further downstream to the exhaust manifold 106, such as beyond the turbine 120 of the turbocharger 110, and may be configured to detect a temperature of the exhaust gas at any given point in time. In some embodiments, the controller 114 may estimate the quality of fuel based on the temperature determined of the exhaust gas. According to an exemplary principle, a low quality fuel may result in a high temperature exhaust gas (detectable by the temperature sensor 126). This is because a relatively low quality fuel may sustain a delayed combustion, and a delayed combustion may lead to a loss of excessive heat energy through the exhaust manifold 106 (from the second valve 144), thereby resulting in higher exhaust gas temperatures. Therefore, a detection of the temperature of the exhaust gas may be indicative of a quality of the fuel as well. More particularly, an increase in the temperature of the exhaust gas is indicative of a decrease in the quality of the fuel, and a decrease in the temperature of the exhaust gas is indicative of an increase in the quality of the fuel. In one embodiment, a temperature detection may only confirm a presence of a low quality fuel, for example, if a low fuel quality were already determined by way of the pressure sensor 124.

It may be noted that both the pressure sensor 124 and/or the temperature sensor 126 may be coupled to the controller 114, so as to feed the controller 114 with data pertaining to a combustion chamber pressure and exhaust gas temperature, respectively. With such data, both the pressure sensor 124 and/or the temperature sensor 126 may enable the controller 114 to take a corrective action to mitigate the effects of a variation in the quality of fuel. This corrective action will be discussed later in the disclosure.

The pollutant sensor 128 may be configured detect an amount of emission of particular pollutant from the exhaust manifold 106. In one implementation, the pollutant sensor 128 is a nitrogen oxide (NOx) sensor configured to detect an amount of NOx expelled from the engine 102. The pollutant sensor 128 may be interchangeably referred to as NOx sensor 128, hereinafter. The NOx sensor 128 may be positioned within the exhaust manifold 106, or at a location downstream to exhaust manifold 106. A detection of NOx may enable the engine system 100 to take an additional corrective action that facilitates a reduction in the emission of NOx. For example, by altering values corresponding one or more parameters of the engine 102, the additional corrective action may mitigate the formation of NOx in the engine system 100. Discussion pertaining to this additional corrective action will also be discussed later in the application.

The air-pressure regulator 108 is configured to control an intake manifold pressure (IMAP) and vary a pressure of air within the engine 102 (or within the combustion chamber 136 of the engine 102). In one embodiment, the air-pressure regulator 108 includes a throttle valve 146 that may be actuated by the controller 114, or, in some implementations, by a manual input. The throttle valve 146 may be coupled to the controller 114 to receive instructions from the controller 114 pertaining to increasing and/or decreasing (or modifying) the airflow through the intake manifold 104. For example, a variation in the intake manifold 104 may be possible by varying a passage of the intake manifold 104. In another embodiment, the air-pressure regulator 108 includes a Blow off Valve (not shown) to regulate (such as by reducing) the air flow from the compressor 116 to the intake manifold 104. In an embodiment, the controller 114 may cause an opening of a Waste Gate valve (not shown) to release a portion of exhaust gas from the engine 102, thereby reducing the exhaust energy driving a turbine 120 of the turbocharger 110, and facilitating a reduction in the intake manifold air pressure, when required. In one embodiment, the air-pressure regulator 108 may be a boost controller, such as including a pneumatic controller or a hydraulic controller. Such a boost controller may be coupled to a compressed airflow line 150 extending between the combustion chamber 136 and the compressor 116 (or the turbocharger 110). In an embodiment, the controller 114 may cause an increase in a speed of the compressor 116 of the turbocharger 110 to increase the intake manifold air pressure. Optionally, or alternatively, the controller 114 may direct a volume of air stored in an air reservoir (not shown) to the intake manifold 104 to increase the intake manifold air pressure, when required.

In some implementations, the air-pressure regulator 108 includes one or more manifold absolute pressure (MAP) sensors (or one or more boost pressure sensors) - termed as a manifold sensor 152 - that may supply a data corresponding to a pressure condition within the intake manifold 104 to the controller 114. In general working, the manifold sensor 152 may sense the pressure condition within the intake manifold 104 and may provide a corresponding signal to the controller 114. The controller 114 may receive and process the signal, and may compare the processed signal against any value, if so required, to accordingly effectuate variations in the air pressure through the intake manifold 104. In some embodiments, an increase in a power of the engine 102 corresponds to a variation of the throttle valve 146 that facilitates additional amount (and in turn more pressure) of air to pass through the intake manifold 104, and thus into the combustion chamber 136 for combustion.

The supply of data from the manifold sensor 152 to the controller 114 may be continuous during engine operations, for example. In an embodiment, the data may be used to calculate an airflow rate, an air density, and other fluid flow parameters, for example. Additionally, or optionally, the air-pressure regulator 108 may include a mass flow sensor (not shown) to detect an intake airflow rate. In one implementation, the air-pressure regulator 108 is configured to maintain an optimum air pressure within the intake manifold 104, and thus within the combustion chamber 136 to attain a desired ignition timing and combustion of the fuel, while also keeping the emissions, such as of NOx, low.

The controller 114 is operatively coupled (or is in electronic communication) with each of the injector 112, the sensors 124, 126, 128 and the air-pressure regulator 108. The controller 114 is configured to estimate a quality of the fuel based on the one or more parameters sensed by the one or more sensors 124, 126 and control the injector 112 to vary an amount of the fuel injected into the combustion chamber 136 of the engine 102 upon the quality of the fuel deviating or varying from a desired quality value. Moreover, the controller 114 is also configured to control the air-pressure regulator 108 to modify a pressure of air in the intake manifold 104 of the engine 102 based on the varied amount of the fuel.

In one implementation, varying the amount of fuel includes increasing the amount of fuel in response to the quality of fuel falling below the desired quality value. It may be noted that an increased amount of fuel injected into the combustion chamber 136 may result in higher combustion temperatures within the combustion chamber 136. As a result, there may be a possibility of increased NOx formation. To mitigate NOx formation, the controller 114 is also configured to control the air-pressure regulator 108 so as to modify (i.e. in this case increase) the pressure of air in the intake manifold 104 of the engine 102, for combustion based on the increased amount of the fuel injected into the engine 102. Upon an increased injection of the fuel, a modification of the air-pressure corresponds to an increase of the volume flow of air, thereby increasing the pressure of air traversing through the intake manifold 104 into the engine 102 (i.e. from the compressor 116 to the combustion chamber 136). As a result, there may also be an increase in an air-pressure and an air-fuel ratio within the combustion chamber 136. An increased air-pressure within the combustion chamber 136 may lower the temperature of combustion within the combustion chamber 136, thus lessening NOx formation. In may be noted, therefore, that modifying the air is based on the increased amount of fuel injected into the combustion chamber 136 (or by the parameters received by one or more sensors).

In some other implementations, varying the amount of fuel includes decreasing the amount of fuel in response to the quality of fuel exceeding the desired value. A decreased amount of fuel may result in reduced temperatures of the combustion of fuel within the combustion chamber 136, and thus, in a decreased amount of NOx formation. In some implementations, the controller 114 is configured to control the air-pressure regulator 108 so as to modify (i.e. in this case decrease) a volume flow of air into the intake manifold 104 of the engine 102, thereby decreasing the pressure of air, based on the decreased amount of fuel. In so doing, for example, a desired ratio between the air and the fuel may be attained. Moreover, undesirable effects of a higher air-fuel ratio, than what the engine 102 and the associated combustion pattern has been designed for, may be avoided.

The controller 114 may be configured to receive signals corresponding to a pressure within the combustion chamber 136, exhaust gas temperature, and NOx, respectively from the pressure sensor 124, the temperature sensor 126, and the NOx sensor 128. Further, the controller 114 may be coupled to the injector 112, as has already been mentioned above, so as to control the injector 112 and inject an amount of fuel according to one or more parameters - i.e. the exhaust gas temperature and the combustion characteristics determined through one or more of the sensors 124, 126, 128. Since both the combustion characteristic and the exhaust temperature may help deduce the same result, in some implementations, only one of the combustion characteristic or the exhaust temperature may be applied to deduce the quality of fuel. However, it is possible that the controller 114 may tally the quality of fuel deduced by way of both the combustion characteristics and the exhaust gas temperature, to confirm and determine a presence of a quality variation in the fuel. If by tallying, there is deduced a difference (such as in excess of a minimum difference) between the combustion characteristics and the exhaust gas temperature, the controller 114 may interpret the analysis of signals from the pressure sensor 124 (and/or the temperature sensor 126) an erroneous indication of low quality fuel. Nevertheless, in some embodiments, the controller 114 may take an average of the quality of fuel deduced by help of both the pressure sensor 124 and the temperature sensor 126, and use said average to implement the corrective action (i.e. to control the injector 112 to increase fuel injection).

The controller 114 may include a memory 154 that may store a variety of values and sets of instruction pertaining to the processing of the signals received from the pressure sensor 124, the temperature sensor 126, and the NOx sensor 128. For example, the memory 154 may include a desired quality value, plurality of fuel quality values against every unit change in a combustion characteristic (such as a timing of a start of the combustion), and fuel quality values against every unit change in exhaust gas temperature. Such fuel quality values may form look-up tables. To this end, the memory 154 may include look-up tables, charts, that may help the controller 114 tally and determine a quality of the fuel against any particular deduced combustion characteristic or sensed exhaust gas temperature.

In one implementation, the controller 114 may determine one or more combustion characteristics by use of a pressure trace (or pressure history). For example, a measured cylinder pressure (with the help of the pressure sensor 124) is obtained and a start of fuel injection is determined. Thereafter, an estimation is carried out, such as through the ideal gas law, of how the pressure within the combustion chamber 136 would change or vary without combustion. The pressure estimated (with no combustion) is then compared against the measured cylinder pressure. A difference between the two facilitates determination of an energy required for the measured cylinder pressure - this may help deduce a burn rate (i.e. energy/crank angle of the engine 102). By determination of the burn rate, the start of the combustion, duration of the combustion, end of the combustion, and the center of the combustion may be computed.

Further, the controller 114 is configured to receive signals pertaining to NOx from the NOx sensor 128. To mitigate NOx, the controller 114 may increase the passage of the intake manifold 104, such as by varying the throttle valve 146. In one implementation, a NOx value sensed may be compared against pre-stored values in various look-up tables, and thus against every unit change in NOx, a corresponding variation in pressure may be calculated. Based on this calculation, the throttle valve 146 may be varied, and an additional amount of air may be delivered to the combustion chamber 136 to facilitate a reduction in NOx.

In one embodiment, the controller 114 may be configured to detect an event, or one or more events of engine misfire, to determine the quality of fuel. In one embodiment, engine misfire events may be detected by monitoring the engine 102's in cylinder pressure. An estimation is carried out, such as through the ideal gas law, of how the pressure within the combustion chamber 136 would change or vary without combustion. The pressure estimated (with no combustion) is compared against the measured cylinder pressure. A difference between the two facilitates determination of an energy required for the measured cylinder pressure. An engine misfire will be detected if this difference, integrated for one combustion cycle, is below a threshold, or zero. In one embodiment, therefore, the increase in the amount of the fuel into the engine 102 is based on one or more events of a misfire in the engine 102.

The controller 114 may include power electronics, preprogrammed logic circuits, data processing circuits, associated input/output buses, volatile memory units, such as random access memory (RAM), nonvolatile memory units, etc., to help process and store signals or data received from the sensors 124, 126, 128, for example. Such signals may be processed by a processor 156 of the controller 114. The controller 114 may be a microprocessor based device, or may be implemented as an application-specific integrated circuit, or other logic device, which provide controller functionality, and such devices being known to those with ordinary skill in the art. In some implementations, the controller 114 may form a portion of one of the engine 102's electronic control unit (ECU), or may be configured as a stand-alone entity. Further, the controller 114 may include an analog to digital converter (not shown) that may be configured to receive and convert signals of pressure received from the one or more sensors 124, 126, 128, for example, for a processing by the controller 114's processor 156.

### Industrial Applicability

During operations, combustion in the combustion chamber 136 may occur for executing a power stroke, slightly before the piston 132 reaches a top dead center of the cylinder 130 during a compression stroke of the piston 132. A combustion of the fuel causes the piston 132 to move and execute a work cycle of the engine 102. This principle of operation is generally applicable to the remaining operational cycles of the engine 102. When a quality of an applied fuel recedes below the desired quality value (i.e. when an engine uses a fuel, such as Diesel, with a lower a cetane number), undesirable alterations to the above noted work principle may occur. A low quality fuel, for example, (i.e. a fuel with a low cetane number) is generally not as easily ignitable/combustible as a high quality fuel (i.e. a fuel with a relatively high cetane number fuel), and thus may affect the combustion characteristics of the engine 102.

Occasions may also arise when a high quality fuel is applied in the engine 102. In such a case, the cetane number of the fuel may be above a predetermined value, and this may be monitored based on the data received from the pressure sensor 124 or the temperature sensor 126. As a result, one or more combustion characteristics may change - for example, there may be an advance in the start of the combustion.

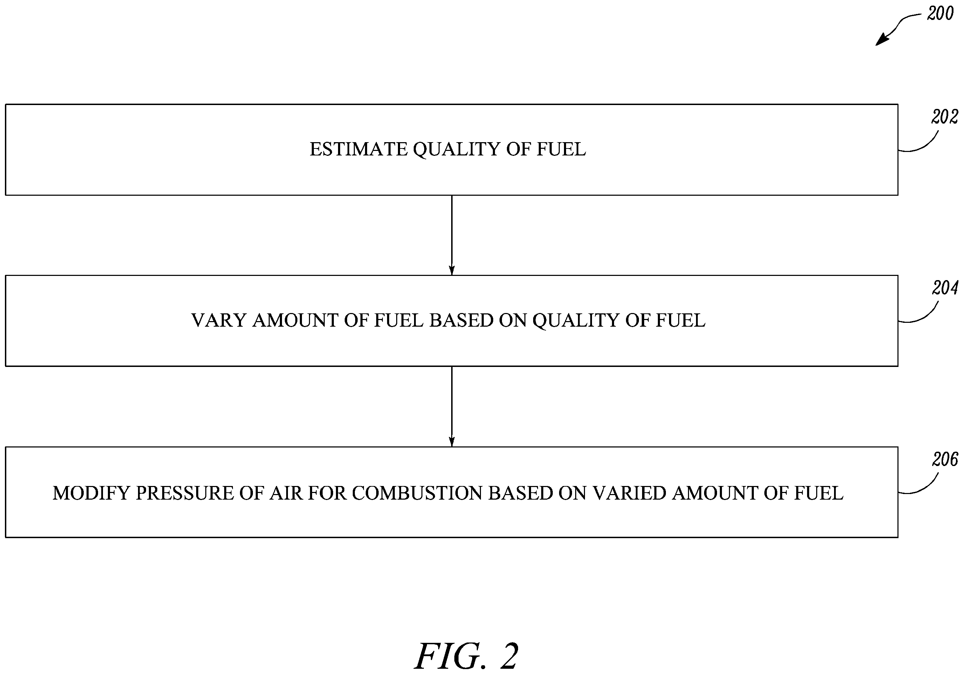

In light of this, the present disclosure discusses an exemplary method by which a combustion of a fuel is controlled, and an output of an engine (the engine 102) is corrected and maintained when fuel with a varying quality is applied. Referring to FIG. 2, this exemplary method is discussed. Notably, this exemplary method has been described by way of a flowchart 200 and is discussed in conjunction with FIG. 1. The method starts at step 202 and is discussed further below.

Use of a low quality fuel may cause a delayed combustion, and similarly, use of a high quality fuel may cause an advance in the start of the combustion. Such conditions may generate pressure variations, or pressure conditions within the combustion chamber 136 that may differ from an appropriate/desired pressure condition, during combustion, and thus variations in the combustion characteristics. During such conditions, the pressure sensor 124 detects the pressure variations and generates a signal corresponding the pressure condition, and transmits the signal to the controller 114. In one scenario, the controller 114 may register the timing of the signals, and may compare the timings against a preset combustion timing pattern. Therefore, if a start of the combustion of the fuel varies from a desired start value, or a duration of the combustion of the fuel varies from a desired duration value, the controller 114 determines that at least one of the combustion characteristic (a start of the combustion, a duration of the combustion, an end of the combustion, or a center of the combustion) has changed. For example, a delay in start of the combustion is indicative of the fuel falling below the desired quality value, while an advance in start of the combustion is indicative of the fuel exceeding the desired quality value. The controller 114 estimates the quality of fuel according to a variance of the combustion characteristic (step 202). For example, for a variance sensed in the start of the combustion, the controller 114 may register either one of a low quality fuel or a high quality fuel by a fuel quality unit (i.e. the cetane number).

A detection pertaining to the quality of fuel falling below the desired quality value urges the controller 114 to take one or more corrective measures/actions so as to bring the engine 102 back to an efficient working cycle. For example, if the quality of the fuel has decreased relative to the desired quality value, as a corrective measure/action, the controller 114 controls the injector 112 such that the injector 112 injects a varied (i.e. an additional/increased) amount of fuel into the combustion chamber 136 of the engine 102 (step 204). Similarly, if it were detected that the quality of the fuel has increased relative to the desired quality value, as a corrective measure/action, the controller 114 controls the injector 112 such that the injector 112 injects a varied (i.e. a decreased) amount of fuel into the combustion chamber 136 of the engine 102.

In one scenario, if it is determined that the start of the combustion has varied (retarded/advanced) by a time, such as from a desired start value, the controller 114 may instruct the injector 112 to increase/decrease fuel injection by a similar or by a proportional amount into the combustion chamber 136. Apart from the 'start of the combustion', instructions from the controller 114 pertaining to a variation of fuel injection are also similarly based on a duration of the combustion of the fuel varying from a desired duration value, may be an exhaust gas temperature of the engine 102 varying from a desired temperature value, and/or one or more events of a misfire in the engine 102 exceeding a minimum misfire event value.

In one implementation, the combustion of fuel within the combustion chamber 136 may also cause a heightening of the exhaust gas temperature. Therefore, a heightened temperature of the exhaust gas may also serve as an indicator of a poor/low quality fuel, as already noted above. In one implementation, therefore, the controller 114 receives a signal corresponding a temperature of the exhaust gas, and a quality of fuel may be adjudged when a temperature of the exhaust gas exceeds a predefined, desired temperature value. For example, if the controller 114 determines that the exhaust gas temperature has varied (or increased) by a predefined degree, the controller 114 may instruct the injector 112 to vary or increase fuel injection by a similar or by a proportional amount. Therefore, the increase in the amount of the fuel into the engine 102 is based on an exhaust gas temperature of the engine 102 exceeding a desired temperature value. In some situations, however, the controller 114 may use the signal from the temperature sensor 126 only to tally and confirm what the controller 114 has already determined by using the signal from the pressure sensor 124.

In some scenarios, conversely, the controller 114 may use a signal from only the temperature sensor 126 to determine a quality of fuel. For example, for every unit increase in the exhaust gas temperature, the controller 114 may register a degradation of the quality of the fuel by a quality unit (for example, the cetane number). Accordingly, if it were determined that the exhaust gas temperature has increased by a particular degree, the controller 114 may instruct the injector 112 to increase fuel injection by a similar or by a proportional degree into the combustion chamber 136.

According to step 206, the controller 114 modifies a pressure of air in the intake manifold 104 of the engine 102 based on the varied (i.e. increased or decreased) amount of the fuel. In case of a low quality fuel (i.e. upon the quality of the fuel falling below a desired quality value), and owing to the controller 114 increasing fuel injection into the engine 102, the controller 114 may further increase the pressure of air in the intake manifold 104. This is because, owing to increased fuel injection, a temperature of the combustion of the fuel within the combustion chamber 136 may increase. As a result, the engine system 100 may start expelling increased amounts of pollutants, such as of NOx. Since it is obligatory to contain such pollutants according to environmental mandates, the controller 114 modifies the pressure of air for combustion that is introduced into the combustion chamber 136 through the air-pressure regulator 108, based on the increased amount of the fuel. In one operational scenario, an increased formation and emission of NOx from the engine 102 is sensed by the NOx sensor 128, and the NOx sensor 128 transmits a corresponding NOx signal to the controller 114. The controller 114 estimates the NOx and determines an amount of air that needs to be delivered to the combustion chamber 136 that is in addition to the air that is already in supply to the engine 102 - an air already in supply to the engine 102 may be determined by way of the manifold sensor 152, disclosed above. In one embodiment, the controller 114 may modify/increase a pressure of air according to every unit variation/increase in NOx emissions. An increase in air-pressure may correspond to an increase in an amount of air delivered to the engine 102, and thus an increase in the air-fuel ratio (relative to the air-fuel ratio at step 204) within the combustion chamber 136. In another embodiment, the NOx sensor 128 may be omitted, and the controller 114 may determine an increase in the amount of air solely based on the increase in the amount of fuel injected into the combustion chamber 136. For example, the controller 114 may increase the amount of air based on every unit rise in the fuel injected to the engine 102.

In case of a high quality fuel, the controller 114 may decrease the pressure of air in the intake manifold 104. In so doing, an optimum ratio between the air and the fuel may be attained, and factors pertaining to the start of the combustion, duration of the combustion, and the exhaust gas temperature, may be optimized. Moreover, chances of engine misfires may be arrested. Furthermore, in such a case, the controller 114 may decrease the amount of fuel injected into the combustion chamber 136 when the controller 114 determines that the quality of the fuel is above the desired quality value - such as when an early combustion is detected by a data from the pressure sensor 124 and/or lower exhaust gas temperature is detected by the temperature sensor 126. In such a case, the controller 114 may further decrease the pressure of air introduced into the engine 102 based on the decreased amount of fuel. It may be noted that the controller 114 may decrease the amount of fuel and the pressure of air in a similar manner as the controller 114 implements an increase in the amount of fuel (i.e. by controlling the injector 112) and the pressure of air (i.e. by controlling the air-pressure regulator 108), which has already been described above. The method ends at step 206.

In certain implementations and applications, a quality of the fuel may be computed by one or more, or by a combination of the above noted fuel quality measuring methods. For example, in some embodiments, the temperature sensor 126 may be altogether omitted, and a quality of the fuel may be determined based on the inputs of the pressure sensor 124 alone. Further, it will be appreciated that in certain applications where the NOx sensor 128 may also be omitted, the pressure sensor 124 may serve as a sole indicator of a quality of fuel and a determinant of an extent to which a fuel injection needs to be increased so as to arrest combustion delay, and an extent to which air pressure needs to be raised to mitigate the NOx emissions. The corrective measures/actions proposed by the present disclosure not only addresses the issues related to retarded combustion in engines and poor engine output owing to low quality fuels, but also addresses the need to attain various emission targets.

It should be understood that the above description is intended for illustrative purposes only and is not intended to limit the scope of the present disclosure.

## Claims

1. A method for controlling combustion of a fuel in an engine (102), the method comprising:
- estimating a quality of the fuel based on one or more parameters of the engine (102) by
i) measuring, by a pressure sensor (124), a pressure within a combustion chamber (136) of the engine (102) during a combustion of the fuel;
ii) determining a duration of the combustion of the fuel based on the pressure measurement, wherein an increase in the duration of the combustion is indicative of a decrease in the quality of the fuel, and a decrease in the duration of the combustion is indicative of an increase in the quality of the fuel; and
iii) determining a temperature of an exhaust gas of the engine (102), wherein an increase in the temperature of the exhaust gas is indicative of a decrease in the quality of the fuel, and a decrease in the temperature of the exhaust gas is indicative of an increase in the quality of the fuel;
- increasing an amount of the fuel injected into the engine (102) in response to the quality of the fuel falling below a desired quality value and decreasing the amount of the fuel in response to the quality of the fuel exceeding the desired quality value; and
- increasing a pressure of air in an intake manifold (104) of the engine (102) based on the increased amount of the fuel and decreasing the pressure of air based on the decreased amount of fuel.

2. The method of claim 1, wherein the fuel is a Diesel fuel.

3. The method of claim 1, wherein the quality of the fuel corresponds to a cetane number of the fuel.

4. The method of claim 1 further including estimating a change in nitrogen oxide (NOx) discharged from the engine (102) upon varying the amount of the fuel, wherein:
the pressure of air is varied according to the change in the NOx.

## Patentansprüche

1. Verfahren zum Steuern von Verbrennung eines Kraftstoffs in einem Motor (102), das Verfahren umfassend:
Schätzen einer Qualität des Kraftstoffs basierend auf einem oder mehreren Parametern des Motors (102) durch
i) Messen, durch einen Drucksensor (124), eines Drucks innerhalb einer Brennkammer (136) des Motors (102) während einer Verbrennung des Kraftstoffs;
ii) Bestimmen einer Dauer der Verbrennung des Kraftstoffs basierend auf der Druckmessung, wobei eine Erhöhung der Dauer der Verbrennung eine Verringerung der Qualität des Kraftstoffs anzeigt, und eine Verringerung der Dauer der Verbrennung eine Erhöhung der Qualität des Kraftstoffs anzeigt; und
iii) Bestimmen einer Temperatur eines Abgases des Motors (102), wobei eine Erhöhung der Temperatur des Abgases eine Verringerung der Qualität des Kraftstoffs anzeigt, und eine Verringerung der Temperatur des Abgases eine Erhöhung der Qualität des Kraftstoffs anzeigt;
- Erhöhen einer Menge des Kraftstoffs, der in den Motor (102) eingespritzt wird, als Reaktion darauf, dass die Qualität des Kraftstoffs unter einen gewünschten Qualitätswert fällt, und Verringern der Menge des Kraftstoffs als Reaktion darauf, dass die Qualität des Kraftstoffs den gewünschten Qualitätswert überschreitet; und
- Erhöhen eines Luftdrucks in einer Ansaugsammelleitung (104) des Motors (102) basierend auf der erhöhten Menge des Kraftstoffs und Verringern des Luftdrucks basierend auf der verringerten Menge von Kraftstoff.

2. Verfahren nach Anspruch 1, wobei der Kraftstoff ein Dieselkraftstoff ist.

3. Verfahren nach Anspruch 1, wobei die Qualität des Kraftstoffs einer Cetanzahl des Kraftstoffs entspricht.

4. Verfahren nach Anspruch 1, ferner umfassend das Schätzen einer Änderung von Stickstoffoxid (NOx), das aus dem Motor (102) bei einem Variieren der Menge des Kraftstoffs abgegeben wird, wobei:
der Luftdruck gemäß der Änderung des NOx variiert wird.

## Revendications

1. Procédé de commande de la combustion d'un carburant dans un moteur (102), le procédé comprenant :
l'estimation d'une qualité du carburant en fonction d'un ou plusieurs paramètres du moteur (102) en
i) mesurant, au moyen d'un capteur de pression (124), une pression à l'intérieur d'une chambre de combustion (136) du moteur (102) pendant la combustion du carburant ;
ii) déterminant une durée de la combustion du carburant en fonction de la mesure de pression, dans lequel une augmentation de la durée de la combustion indique une diminution de la qualité du carburant, et une diminution de la durée de la combustion indique une augmentation de la qualité du carburant ; et
iii) déterminant la température d'un gaz d'échappement du moteur (102), dans lequel une augmentation de la température du gaz d'échappement indique une diminution de la qualité du carburant, et une diminution de la température du gaz d'échappement indique une augmentation de la qualité du carburant ;
l'augmentation de la quantité du carburant injecté dans le moteur (102) lorsque la qualité du carburant est inférieure à une valeur de qualité souhaitée et la diminution de la quantité de carburant lorsque la qualité du carburant est supérieure à la valeur de qualité souhaitée ; et
l'augmentation de la pression de l'air dans le collecteur d'admission (104) du moteur (102) en fonction de l'augmentation de la quantité de carburant et la diminution de la pression de l'air en fonction de la diminution de la quantité de carburant.

2. Procédé selon la revendication 1, dans lequel le carburant est un carburant Diesel.

3. Procédé selon la revendication 1, dans lequel la qualité du carburant correspond à l'indice de cétane du carburant.

4. Procédé selon la revendication 1, comportant en outre l'estimation d'un changement dans l'oxyde d'azote (NOx) rejeté du moteur (102) lors de la variation de la quantité du carburant, dans lequel :
la pression de l'air est modifiée selon la variation de l'oxyde d'azote (NOx).
